Europäisches Patentamt

European Patent Office

Office européen des brevets

(19)

(11) Numéro de publication: **0 050 539**
**B1**

# FASCICULE DE BREVET EUROPÉEN

(45) Date de publication du fascicule du brevet:
13.01.88

(21) Numéro de dépôt: 81401485.8

(22) Date de dépôt: 24.09.81

(51) Int. Cl.⁴: **G 01 S 3/78**, F 41 G 7/22,
G 02 B 26/10

(54) Dispositif à imagerie vidéo pour un autodirecteur.

(30) Priorité: 21.10.80 FR 8022458

(43) Date de publication de la demande:
28.04.82 Bulletin 82/17

(45) Mention de la délivrance du brevet:
13.01.88 Bulletin 88/2

(84) Etats contractants désignés:
DE GB IT NL SE

(56) Documents cité:
EP-A-0 009 071
FR-A-2 134 497
FR-A-2 446 468
GB-A-2 075 789
US-A-3 010 677
US-A-3 854 821
US-A-4 010 365
US-A-4 067 061

Techniques de l'Ingenieur E291

(73) Titulaire: THOMSON- CSF, 173, Boulevard
Haussmann, F-75379 Paris Cédex 08 (FR)

(72) Inventeur: Pepin, Christian, THOMSON- CSF SCPI
173, bld Haussmann, F-75360 Paris Cedex 08 (FR)
Inventeur: Herlin, Patrick, THOMSON- CSF SCPI
173, bld Haussmann, F-75360 Paris Cedex 08 (FR)

(74) Mandataire: Trocellier, Roger, THOMSON- CSF
SCPI 19, avenue de Messine, F-75008 Paris (FR)

EP 0 050 539 B1

LIBER, STOCKHOLM 1988

## Description

La présente invention concerne un dispositif à imagerie vidéo pour autodirecteur.

La solution généralement utilisée pour réaliser un autodirecteur à imagerie vidéo consiste à placer le détecteur d'image et son optique sur un même support orientable selon deux axes, un axe site et un axe gisement. Le support ainsi équipé est stabilisé soit directement par une toupie de gyroscope placée sur ce même support formé par un cardan, soit indirectement par liaison mécanique ou électrique avec une plate-forme stabilisée. Dans ces conditions l'axe optique constituant l'axe de visée du dispositif est stabilisé quelle que soit l'orientation relative de l'axe longitudinal du missile qui supporte l'ensemble. Ce montage nécessite des liaisons par connexion électrique entre la partie mobile du support constitué par un cardan et portant le détecteur et la partie constituée par le missile, ce dernier comportant les circuits d'alimentation ainsi que les circuits de traitement des signaux-détectés. Il en résulte des couples parasites par les liaisons électriques qui occasionnent la précession et des dérives du montage gyroscopique.

Le but de la présente invention est de remédier à ces inconvénients en montant le détecteur sur la structure fixe liée au missile. Le dispositif détecteur n'étant plus porté par la structure stabilisée et mobile en site et en gisement il en résulte une simplification très grande de la structure stabilisée étant donné la suppression des liaisons électriques entre la partie fixe et la partie mobile. La suppression des couples parasites dus à ces liaisons permet d'améliorer la qualité de la stabilisation de l'axe de visée.

Il est connu de monter une optique réceptrice sur un support cardan permettant de l'orienter par rotation autour de deux axes mécaniques perpendiculaires passant par le centre du cardan. Un premier miroir plan placé en ce centre permet de réfléchir le rayonnement reçu selon l'un des axes mécaniques de rotation. Suivant une solution de ce genre décrite dans US-A-4 087 061, ce premier miroir effectue un double mouvement de rotation, la rotation complète autour de l'axe lacet et la rotation de valeur moitié de celle de l'objectif autour de l'axe tangage, de manière à renvoyer la direction de l'axe optique d'entrée selon celle de l'axe de lacet sans transiter par celle de l'axe tangage. Le rapport 2/1 en rotation est obtenu par un asservissement mécanique du miroir central. D'autre miroirs de renvoi font cheminer le rayonnement jusqu'au détecteur monté fixe sur le corps du missile. En l'absence de circuit de compensation de rotation d'image, ce montage permet de détecter un point chaud en infrarouge. La stabilisation de l'axe optique d'entrée est obtenue par une plate-forme gyroscopique disposée entre le miroir central et le détecteur. Cette solution est volumineuse, complexe et de mise en oeuvre délicate; elle nécessite deux moteurs d'entrainement l'un selon l'axe lacet l'autre selon l'axe tangage ainsi qu'un moteur d'entraînement en roulis du cardan.

Suivant une autre solution du type considéré décrite dans EP-A-0 009 071, l'optique réceptrice est montée solidaire avec une caméra de télévision sur un berceau orientable en site; le renvoi optique utilise ledit premier miroir pour réfléchir l'axe optique selon l'axe site. D'autres caméras à film sont prévues montées sur le berceau orienté en gisement, il n'y a pas de compensation d'orientation d'image.

Une autre solution décrite dans le brevet US-A-3 854 821 utilise une optique déflectrice formée de plusieurs miroirs pour réfléchir selon un axe site et selon un axe gisement. L'optique réceptrice et un couple de miroirs sont solidaires et peuvent tourner autour de l'axe site. Un autre miroir tourne autour de l'axe gisement. Il n'y a pas de montage cardan, les axes d'entrée et de sortie ne passe pas par un point commun. Des moyens sont prévus pour contre-balancer la rotation de l'image au niveau des détecteurs.

Il est connu sur un autodirecteur de missile d'utiliser une toupie gyroscopique libre non seulement pour stabiliser la ligne de visée et contrôler la trajectoire du missile, mais aussi pour commander l'orientation spatiale de la ligne de visée par le phénomène de précession. On pourra se reporter, par exemple, à ce sujet au brevet US 3 010 677.

Selon l'invention le but est atteint dans un dispositif du genre à cardan susmentionné par les caractéristiques techniques figurant dans la partie caractérstique de la revendication 1.

Suivant un autre objet de l'invention le dispositif à imagerie vidéo cornporte en outre des moyens de compensation de la rotation d'image intervenant au niveau du plan de détection et qui résulte de la rotation relative des axes.

Les particularités et avantages de l'invention ressortiront de la description qui suit donnée à titre d'exemple non limitatif à l'aide des figures annexes qui représentent:

- figure 1, un schéma simplifié d'un dispositif à imagerie vidéo conforme à l'invention;

- figure 2, un extrait du schéma de la figure 1 relatif aux éléments optiques déviateurs produisant le déport d'image ;

- figure 3, un schéma d'un mode de réalisation du dispositit suivant la figure 1;

- figure 4, une forme de réalisation de l'optique déviatrice produisant le déport d'image ;

- figure 5, un exemple de réalisation du dispositif selon les figures 1 et 4, monté sur un autodirecteur;

- figure 6, une variante de réalisation du dispositif à imagerie vidéo conforme à l'invention, utilisant des fibres optiques pour produire le déport d'image;

- figure 7, un diagramme du dispositif à imagerie vidéo utilisant une solution électrique pour compenser la rotation d'image;

- figure 8, un schéma simplifié d'une variante de réalisation du dispositif à imagerie vidéo dans le cas où il comporte une optique déflectrice et une barrette détectrice;

- figure 9, un diagramme d'un dispositif selon la figure 8 utilisant une solution optique pour compenser la rotation d'image;

- figures 10a, 10b, et 10c, diverses formes de réalisation de l'optique de compensation dans le dispositif selon la figure 9.

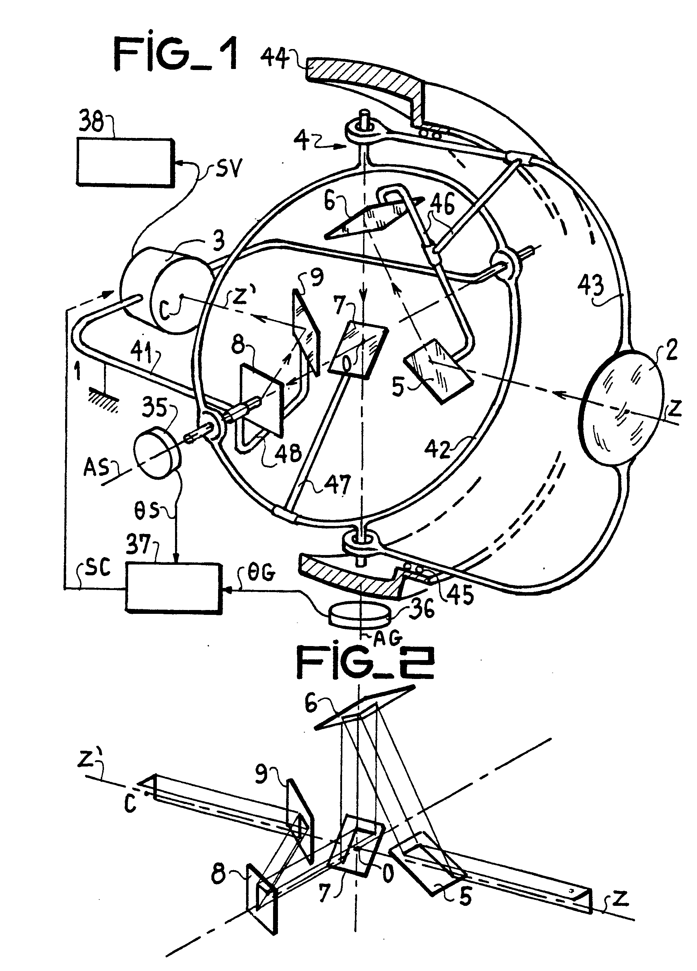

En se reportant à ta figure 1, le dispositif à imagerie vidéo comporte un moyen support symbolisé par 1, dans le cas d'un autodirecteur l'organe support 1 sera constitué par le corps du missile. Les éléments supportés par le moyen 1 comprennent une optique réceptrice 2 qui focalise le rayonnement sur un détecteur d'image vidéo 3, et des moyens de stabilisation de la direction de l'axe optique Z de l'optique 2, ou axe de visée du dispositif. Ces moyens sont désignés par le repère général 4 et ils comportent un montage à au moins deux degrés de liberté, tel un cardan, autorisant la rotation de l'axe Z autour d'un premier axe mécanique dit axe gisement AG et autour d'un deuxième axe mécanique dit axe site AS, ces axes mécaniques étant perpendiculaires et passant par le centre O du cardan. Le point O constitue dans cet exemple le centre instantané de rotation de l'axe Z. La figure 1 représente un montage gyroscope libre à toupie extérieure. La suspension à deux degrés de liberté est identifiable par un premier cadre 41 solidaire du moyen support 1, une partie centrale sous forme d'un anneau 42 pouvant tourner en site autour de l'axe AS et un deuxième cadre 43 qui peut tourner autour de l'axe gisement AG. La toupie 44 ou masse gyroscopique est entraînée en rotation autour de l'axe optique ou axe du gyroscope Z et est découplée du cadre 43 par des moyens 45 tels des roulements à billes.

Conformément à l'invention, le détecteur d'image 3 est fixé directement sur le moyen support 1 (dans le cas figuré à l'aide du cadre 41 solidaire de l'organe support). Cette configuration est rendue possible par l'aménagement du dispositif avec des moyens de déport d'image destinés à maintenir l'image de champ centrée sur le détecteur et dans le plan de photodétection, en présence de rotation en site et/ou en gisement de l'axe Z. Les moyens de déport d'image sont optiques et donc statiques, montés sur le cardan. Ils peuvent être réalisés, notamment avec des éléments optiques deviateurs, tels des miroirs ou des prismes, ou encore à l'aide de fibres optiques; selon la présente invention la condition réalisée est que le trajet des rayons lumineux se trouve orienté successivement selon chacun des deux axes du cardan, site AS et gisement AG. La version de la figure 1 utilise des miroirs réfléchissants, au nombre de cinq, permettant d'éviter un parallaxe entre l'axe optique d'entrée Z du dispositif de déport d'image et l'axe optique de sortie Z'. L'axe Z' passe par O et aboutit sensiblement au centre du détecteur 3, il constitue un axe de référence car sa direction est fixe par rapport à l'organe support 1. Pour l'application envisagée, l'axe Z' est l'axe longitudinal du missile porteur de l'autodirecteur.

Le fonctionnement du dispositif de déport d'image apparait de manière simplifiée sur la figure 2 sous forme de rayons parallèles. L'image du champ observé est focalisée par l'optique 2 sur le plan de photodétection du détecteur 3 après plusieurs réflexions successives de l'axe optique Z sur les miroirs 5 à 9 du dispositif de déport d'image. Un premier couple de miroirs 5 et 6 est utilisé pour renvoyer la direction Z selon celle AG de l'axe gisement. Ces miroirs sont montés solidaies du troisième cadre 43 par des éléments mécaniques 46, le miroir 5 est interposé sur l'axe Z et le miroir 6 sur l'axe AG avec des inclinaisons respectives déterminées pour obtenir le renvoi terminal désiré selon AG. Un miroir central 7 est positionné en O, également incliné à 45° sur les axes AG et AS, de manière à réfléchir ensuite la direction du trajet optique selon celle de l'axe site AS. Le miroir 7 est solidaire du deuxième cadre ou anneau 42 par un agencement mécanique 47. Enrin, le couple de miroirs 8 et 9, analogue au couple d'entrée 5-6, assure le renvoi terminal selon l'axe de sorfie Z'. Les miroirs 8 et 9 sont solidaires du premier cadre fixe 41 par des éléments de fixation 48, le miroir 8 étant positionné sur l'axes AS et le miroir 9 sur la direction Z' allant du centre du cardan O au centre C du détecteur 3. L'axe Z' étant fixe par rapport à la structure support 1, tous les mouvements relatifs en site et en gisement de l'axe d'entrée 2 stabilisé par le gyroscope, par rapport à cette structure, n'entraînent aucun déplacement de l'axe optique de sortie Z'; en outre le trajet optique entre la lunette 2 et le plan de photodétection en 3 demeure invariant en présence de ces mouvements relatifs et l'image se forme toujours dans un même plan lié à la structure 1 et donc fixe par rapport à celle-ci, quels que soient les mouvements en site et en gisement.

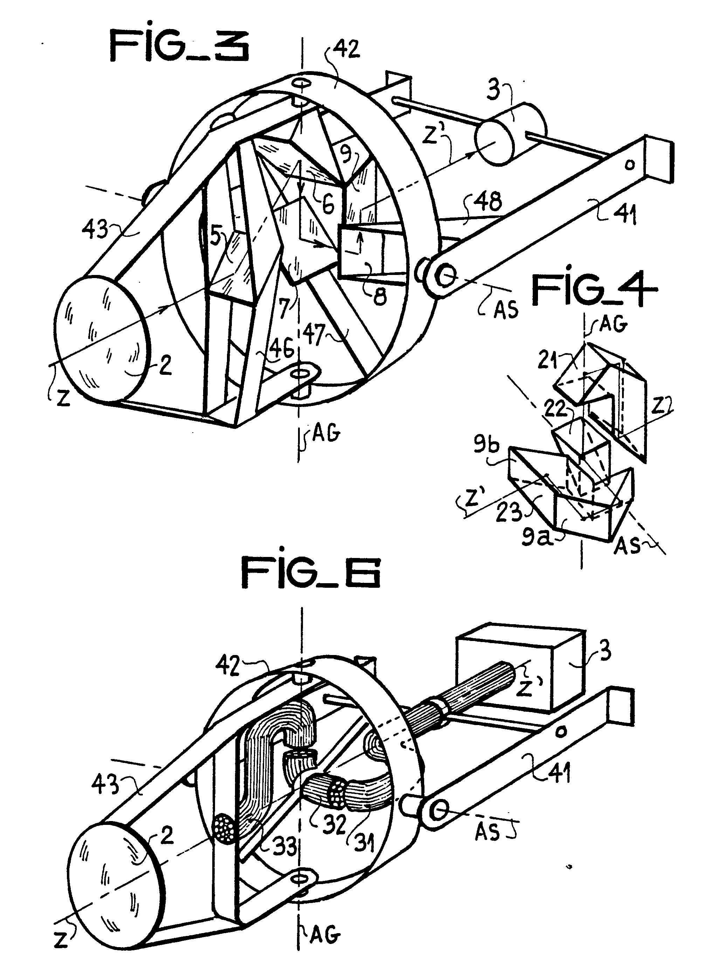

La figure 3 illustre un mode de réalisation du dispositif suivant la figure 1, les mêmes éléments étant désignés par les mêmes références.

La figure 4 montre une variante de réalisation de l'optique déviatrice produisant le déport d'image à l'aide de trois prismes, un premier prisme 21 tournant selon l'axe gisement AG, dit prisme gisement, un prisme central 22, ou prisme infermédiaire, et un troisième prisme 23 tournant selon l'axe site AS, dit prisme site. On se rend compte que cette configuration correspond à utiliser sept miroirs réfléchissats au lieu de cinq. Les réflexions optiques peuvent s'effectuer toutes à 90° comme représenté, dans la mesure où les faces réfléchissantes formant miroirs se trouvent inclinées à 45° par rapport aux directions AS et AG correspondantes. Vis-à-vis de la structure précédente, cette configuration revient à doubler les miroirs d'entrée et de sortie; ainsi l'élément 9 est remplacé par les deux faces réfléchissantes 9a et 9b du prisme 23.

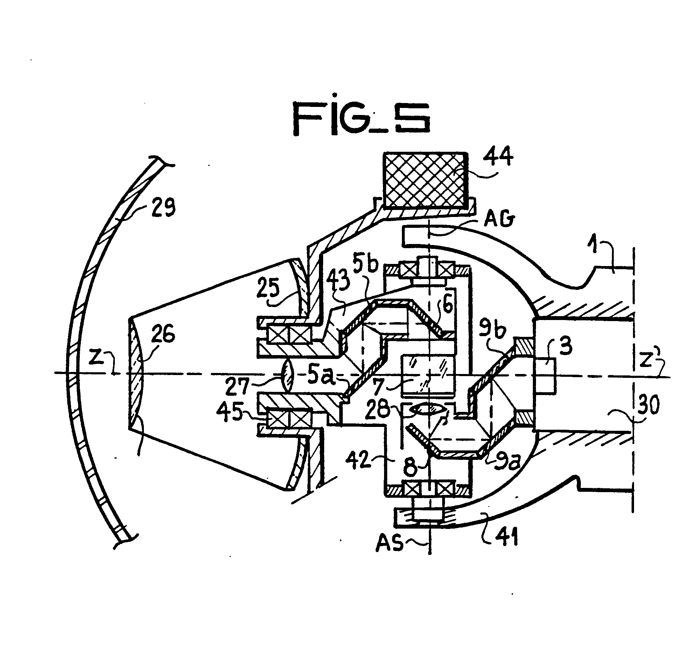

La figure 5 montre une application à un autodirecteur, le dispositif de déport d'image étant constitué selon une version analogue à la figure 4 en utilisant sept miroirs. L'axe optique Z est considéré aligné avec l'axe longitudinal Z' du missile selon la position de référence correspondant à un dépointage nul en site et en gisement. La représentation est faite selon deux demi-coupes axiales par des plans orthogonaux passant respectivement par l'axe gisement AG pour la demi-coupe supérieure et par l'axe site AS pour la demi-coupe inférieure. L'optique réceptrice est formée par un montage Cassegrain d'entrée, miroir principal 25 et miroir secondaire 26, suivi d'une lentille ou un groupe de dioptres en 27 puis en 28. Dans cet exemple les miroirs 25 et 26 du Cassegrain se trouvent entraînés par la toupie 44. L'ensemble 25-26-27 peut être conçu afocal pour reformer le faisceau lumineux sous forme de rayons parallèles à l'entrée du dispositif de déport d'image, l'optique 28 ayant la fonction focalisatrice sur le plan récepteur du détecteur 3. Celui-ci peut consister en un tube de prise de vues, tel un vidicon, ou être réalisé en un circuit solide par une mosaïque de détecteurs (dispositif à transfert de charge ou circuit CCD,"Charge Coupled Device"). L'ensemble est disposé à l'extrémité d'un missile derrière un radome de protection 29 qui laisse passer le rayonnement utile à détecter, par exemple un rayonnement infrarouge compris dans une bande spectrale délimitée. La partie 30 à l'arrière du détecteur comporte des moyens de refroidissement, ou cryostat.

La figure 6 montre un schéma d'une variante de réalisation du dispositif à imagerie vidéo suivant laquelle des fibres optiques sont utilisées pour produire de déport d'image. Les fibres sont constituées de trois tronçons, chacun formant un faisceau de fibres optiques et dont les extrémités sont orientées selon les axes respectifs Z, AG, AS, Z' successivement. Ainsi le premier tronçon 33 solidaire du cadre 43 a sa face d'entrée centrée sur l'axe Z et perpendiculaire à cet axe et sa face de sortie centrée sur l'axe AG et maintenue centrée selon cet axe par des moyens mécaniques non figurés pour simplifier la représentation, le deuxième tronçon 32, ou tronçon central est supporté par le cadre 42 et a pour fonction de renvoyer le faisceau selon la drection AS; sa face d'entrée étant couplée à celle de sortie du tronçon 33 et sa face de sortie étant centrée et perpendiculaire à AS. Enfin le troisième tronçon 31 supporte par le cadre 41 ramène le faisceau selon l'axe Z'; sa face d'entrée est couplée à celle de sortie de l'élément 32 et sa face de sortie est centrée sur Z' dans le plan de détection. Dans cette variante, l'optique réceptrice focalise le rayonnement au niveau de la face d'entrée du premier tronçon 33.

Chacune des solutions décrites précédemment, introduit du fait des déplacements possibles en site et en gisement de l'axe Z par rapport à l'axe Z', une rotation de l'image dans le plan de détection, cette rotation s'effectuant autour de la direction optique de sortie Z' avec une amplitude égale à la somme algébrique des rotations de l'axe Z en site et en gisement. En appelant $\Theta R$ la rotation d'image, $\Theta G$ la rotation en gisement et $\Theta S$ la rotation en site, on a la relation : $\Theta R = \Theta G + \Theta S$. Afin de remédier à cette rotation d'image, le dispositif objet de l'invention est pourvu de moyens de compensation qui sont symbolisés sur la figure 1 par des capteurs 35 et 36, tels des potentiomètres rotatifs, pour mesurer respectivement les paramètres $\Theta S$ et $\Theta G$, et un circuit de compensation 37 qui élabore à partir des valeurs $\Theta S$ et $\Theta G$ une commade SC appropriée. Le signal vidéo SV détecté est appliqué à un circuit d'exploitation 38. La commande SC peut être appliquée au niveau du détecteur selon une des solutions décrites dans ce qui suit.

Une première solution représentée sur la figure 7 est applicable à un autodirecteur télévision, le détecteur étant constitué par un tube ou une mosaïque solide. Le bloc 50 représente l'ensemble des moyens de stabilisation, des moyens de déport d'image et des capteurs agulaires. Le détecteur figuré est un tube vidicon 51 avec des bobines de déflexion 52 symétriques en ligne et en trame. Les valeurs $\Theta S$ et $\Theta G$ délivrées par les capteurs sont sommées dans un circuit 53 pour obtenir un signal correspondant à la rotation d'image $\Theta R$. Ce signal est appliqué à un circuit 54 qui dans la version représentée correspond au générateur de balayage, et commande la modification des dents de scie de balayage en sorte de faire tourner le balayage de la valeur $\Theta R$. Les autres circuits représentés concernent la fonction autodirecteur, le signal vidéo SV, amplifié en 55, est appliqué à un circuit de traitement de poursuite cible 56 qui élabore des signaux de commande de précession en site et en gisement appliqués à un dispositif de stabilisation du gyroscope 57; les crcuits 55 à 57 sont considérés réalisés selon des techniques connues. Une autre solution consiste à effectuer une correction électronique au niveau des écartomètres en sortie du dispositif de poursuite TV en 56; en effet, la position agulaire de l'image état connue à tout instant si l'on connait $\Theta S$ et $\Theta G$, il suffit de convertir les valeurs décartométrie fournies par rapport à des axes liés à la caméra, en des valeurs référées à des axes liés à l'image en rotation. Cette conversion correspond à un simple changement d'axe par rotation $\Theta R$ ; le circuit d'écartométrie 56a élabore les données d'écart $\Delta x$ et $\Delta y$ de la cible par rapport au système d'axes de référence lié à la caméra et ces valeurs sont converties par rapport aux axes liés à l'image en rotation. En appelant $\Delta S$ et $\Delta G$ les nouvelles valeurs, elles se déduisent des premières par les relations: $\Delta S = \sqrt{\Delta x^2 + \Delta y^2}.\cos \beta$ et $\Delta G = \sqrt{\Delta x^2 + \Delta y^2}.\sin \beta$ avec $\beta = \text{arc tg} \frac{\Delta y}{\Delta x} - \Theta R$, ces opérations étant effectuées dans une unité de cacul 56b. La solution peut également être mécanique en considérant le moyen 54 en tant que circuit d'asservissement de position commandant la rotation du détecteur autour de l'axe optique de sortie Z' correspondant au centre de l'image. Le détecteur étant placé sur une partie fixe de la structure du missile, le système de refroidissement peut être très simple en utilisat la conduction thermique avec cette structure. Les couples perturbateurs à vaincre dans le cas d'une rotation du détecteur (fils de connexion, tuyaux de refroidissement, ...) ne risquent pas d'interférer sur la qualité de la stabilisation gyroscopique.

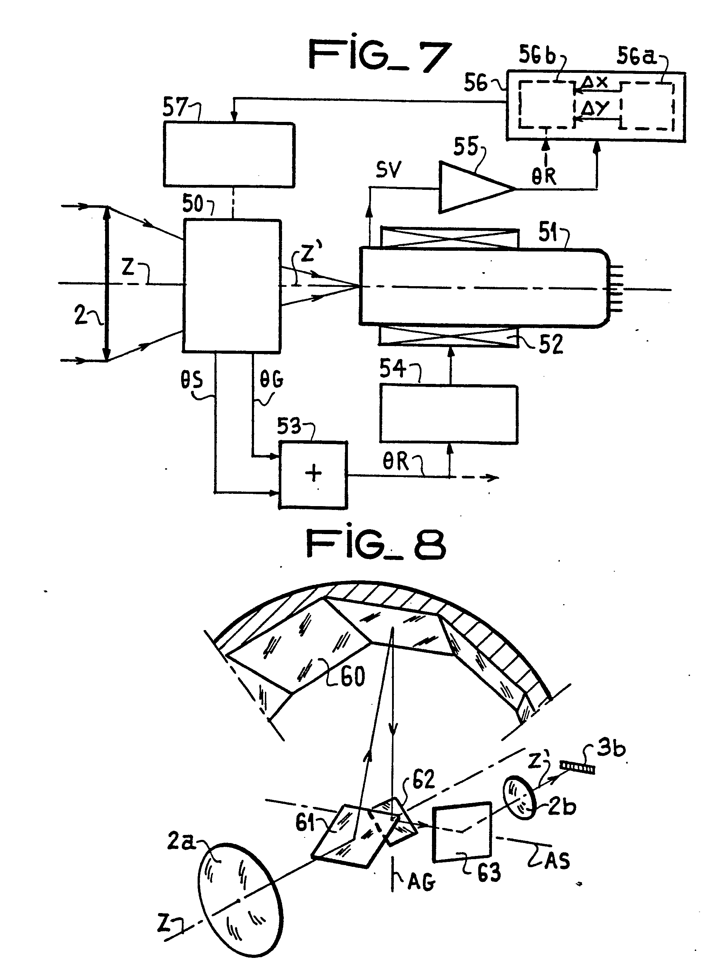

Suivant d'autres formes de réalisation de dispositifs à imagerie vidéo, le détecteur est constitué par une simple barrette détectrice et des moyens de déflexion optique sont prévus pour faire défiler l'image de champ devant le réseau linéaire détecteur. Une structure de ce genre est représentée sur la figure 8 où il a été fait abstraction des éléments mécaniques de stabilisation gyroscopique, par souci de simplification ; l'optique focalisatrice comporte une formule optique à l'entrée symbolisée par une lentille 2a et un ou plusieurs éléments en amont de la barrette détectrice 3b représentés également par une lentille 2b; entre les deux se place une optique déflectrice qui peut compter, selon des techniques connues, un miroir à facettes 60 entraîné par la toupie du gyroscope et tournant autour de l'axe Z. Le faisceau incident est réfléchi grâce à un miroir plan 61 vers le miroir à racettes 60 et la réflexion est ensuite acheminée optiquement vers le détecteur. Le balayage en gisement est obtenu par la rotation du miroir 60. Un balayage en site peut de plus être produit par pivotement du miroir 61, ou par inclinaison différente des facettes successives du miroir 60 par rapport à l'axe de rotation Z. Conformément à l'invention cette structure est aménagée avec un dispositif de déport d'image pour rendre la barrette détectrice fixe. Les moyens correspondants sont constitués par deux miroirs 62 et 63 et par un arrangement des éléments 60 et 61 en sorte que l'axe optique d'entrée Z se trouve finalement réfléchi selon la direction AG du cardan. Le miroir 62 joue le même rôle que le miroir 7 de la figure 1 et le miroir 63 (ou plusieurs miroirs) produit finalement la déviation selon l'axe Z' désiré aboutissant au centre de la barrette. On remarque que le miroir 63 joue le même rôle que l'élément 8 dans le montage figure 7 et qu'il peut être remplacé par deux miroirs ou plus pour supprimer le parallaxe entre Z et Z' selon la solution figure 1, ou figure 5, par exemple.

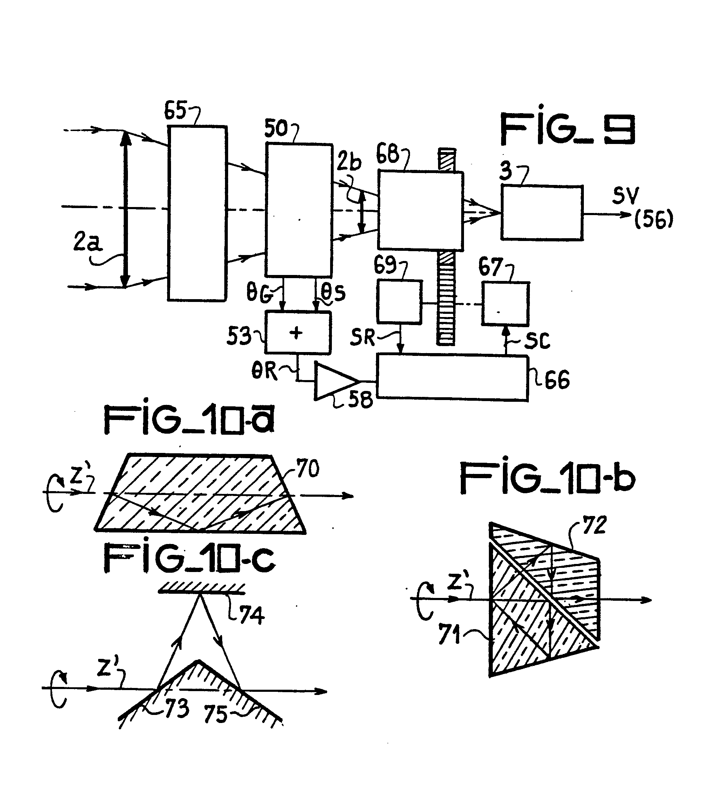

Les autodirecteurs utilisant une barrette détectrice à la place d'une mosaïque ou d'un tube fonctionnent en général dans une bande spectrale infrarouge. Les figures 9 à 11 correspondent à de telles applications mais sont valables également pour le rayonnement visible, le bloc 65 correspondant à l'ensemble optique déflecteur. La version figure 10 est une solution optique pour la compensation de la rotation d'image. Le signal ΘR amplifié en 58 est appliqué à un circuit amplificateur d'asservissement de position 66 qui commande par la sortie SC un servomoteur 67 entraînant une optique compensatrice 68 et un capteur de recopie 69. Le signal de recopie SR est comparé en 66 à la valeur ΘR à rallier. L'élément optique 68 introduit dans la chaîne, entre le déport d'image en 50 et le détecteur 3, peut être réalisé de diverses manières avec un prisme de Wollaston 70 (figure 10a) tournant autour de l'axe Z' ou avec un montage équivalent à prismes dit de Pechan 71-72 (figure 10b) ou au moyen de trois miroirs 73, 74 et 75 (figure 10c). L'amplificateur 58 est déterminé de gain 0,5 pour que la rotation de l'optique en 67 soit de ΘR/2, entraînant par réflexion la rotation ΘR désirée pour l'image.

Le dispositif à imagerie vidéo décrit dans ce qui précède présente comme on peut s'en rendre compte de multiples variantes de réalisation et il est entendu que toute variante conforme aux caractéristiques exposées ne sort pas du cadre de la présente invention. En particulier les solutions optiques (figures 9-10) de compensation de la rotation d'image sont applicables aux dispositifs non pourvus de l'optique déflectrice et d'un détecteur à barrette.

## Revendications

1. Dispositif à imagerie vidéo pour équiper un autodirecteur, comportant:
   - une optique réceptrice (2) pour focaliser le rayonnement sur un détecteur d'images (3) et dont l'axe optique (Z) constitue l'axe optique d'entrée du disposif;
   - un gyroscope libre à toupie extérieure (44) et à montage cardan (4) deux axes (AS, AG) pour stabiliser et commander l'orientation spatiale de l'axe optique d'entrée (Z), ledit montage cardan (4) comportant un premier cadre (43) supportant l'optique réceptrice (2) et tournant autour d'un premier axe mécanique de rotation (AG), et un deuxième cadre (42) supportant le premier cadre et tournant autour d'un deuxième axe mécanique de rotation (AS), les deux axes mécaniques étant perpendiculaires et passant par le centre de rotation (O) du cardan (4) ainsi que l'axe optique d'entrée (Z);
   - ledit détecteur d'images (3) monté fixe sur la structure (41, 1) de l'autodirecteur;
   - des moyens optiques déviateurs (5 à 9) intégrés dans le montage cardan (4) pour faire dévier l'axe optique d'entrée (Z) et le ramener continuement selon la direction axiale de sortie (Z') dite de référence passant par le centre (O) du cardan et aboutissant au centre du détecteur (3), ces moyens optiques déviateurs comprenant un premier (5) et un deuxième (6) moyens déviateurs solidaires du premier cadre (43) pour dévier l'axe optique d'entrée (Z) selon la direction du premier axe mécanique (AG), un troisième moyen deviateur (7) solidaire du deuxième cadre (42) pour dévier ensuite le trajet optique selon la direction du deuxième axe mécanique (AS), et un quatrième (8) et un cinquième (9) moyens déviateurs solidaires de la structure de l'autodirecteur (41, 1) pour amener la direction finale du trajet optique selon celle de référence (Z');

- et des moyens de compensation de la rotation d'image (ΘR) au niveau du détecteur (3) résultant des rotations autour desdits axes mécaniques, comportant deux capteurs angulaires (35, 36) accouplés respectivement auxdits axes mécaniques pour mesurer les rotations correspondantes, et des circuits de compensation (37) solidaires de la structure d'autodirecteur (1) et découplés du montage cardan (4), ces circuits de compensation comprenant un circuit d'addition (53) pour sommer les valeurs (ΘS et ΘG) de rotation mesurées par les capteurs et qui alimente par sa sortie des moyens de commande de rotation d'image.

2. Dispositif selon la revendication 1, caractérisé en ce que les cinq moyens optiques déviateurs sont composés de cinq miroirs réfléchissants (5 à 9).

3. Dispositif selon la revendication 1, caractérisé en ce que les moyens optiques déviateurs se composent de sept miroirs réfléchissants, le premier moyen déviateur (5) étant constitué par deux miroirs parallèles (5a-5b) inclinés à 45° par rapport à l'axe optique d'entrée (Z), les deuxième (6) troisième (7) et quatrième (8) moyens déviateurs étant constitués chacun par un miroir réfléchissant également incliné à 45° par rapport à la direction d'axe mécanique (AS, AG) correspondante, et le cinquième moyen déviateur (9) étant egalement constitué par deux miroirs parallèles (9a - 9b) inclinés à 45° par rapport à l'axe de référence (Z'), en sorte que toutes les deviations s'effectuent à 90°.

4. Dispositif selon la revendication 3, caractérisé en ce qu'il comporte un aménagement de trois prismes (21, 22, 23) pour constituer les sept miroirs, un premier prisme (21) avec trois faces réfléchissantes et pouvant tourner autour d'un premier axe mécanique (AG) un deuxième prisme (22), avec une face réfléchissante au centre du cardan, et un troisième prisme (23) avec trois faces réfléchissantes et pouvant tourner autour du deuxième axe mécaniques (AS).

5. Dispositif selon la revendication 1, caractérisé en ce que les moyens optiques déviateurs sont constitués par trois tronçons successifs de fibres optiques (33, 32, 31), un premier tronçon (33) solidaire du premier cadre (43) et qui remplace lesdits premier (5) et deuxième (6) moyens déviateurs, un deuxième tronçon (32) supporté par le deuxième cadre (42) qui remplace ledit troisième moyen déviateur (7), et un troisième tronçon (31) fixé à la structure de l'autodirecteur (1) qui remplace ledit quatrième (8) et cinquième (9) moyens déviateurs, l'optique réceptrice (2) focalisant l'image sur une face d'extrémité du premier tronçon (33) de fibres.

6. Dispositif selon la revendication 1, caractérisé en ce que le détecteur d'image étant une barrette détectrice il comporte, une optique déflectrice (65) pour produire le balayage de l'image de champ selon au moins une direction, l'optique déflectrice étant située en aval de l'optique réceptrice (2a) et coopérant avec les moyens déviateurs optiques (50) pour le déport d'image.

7. Dispositif selon la revendication 6, caractérisé en ce que le deuxième moyen optique déviateur est un miroir à facettes (60) entraîné en rotation par la toupie gyroscopique (44) pour former ladite optique déflectrice (65) et renvoyant l'axe optique d'entrée (Z) réfléchi par le premier moyen optique déviateur (61) selon la direction du premier axe mécanique (AG).

8. Dispositif selon l'une quelconque des revendications 1 à 5, caractérisé en ce que le détecteur étant un tube de prise de vue (51) équipé de bobines de déflexion symétriques (52) en ligne et trame, la sortie du circuit d'addition (53) est appliquée au circuit générateur de balayage (54) pour produire la compensation de la rotation d'image par modification des dents de scie du balayage.

9. Dispositif selon l'une quelconque des revendications 1 à 5, caractérisé en ce que la sortie du circuit d'addition (53) est appliquée à travers un circuit amplificateur (58) de gain 0,5 à un asservissement de position (66-67-69) entraînant une optique correctrice (68) autour de l'axe de référence (Z'), ladite optique correctrice étant constituée par un prisme de Wollaston (70), un montage à prismes de Pechan (71-72) ou un montage à trois miroirs (73-74-75).

10. Dispositif selon l'une quelconque des revendications 1 à 5, caractérisé en ce que le paramètre de rotation d'image (ΘR) est appliqué à un circuit de calcul (56b) inclus dans un ensemble (56) de traitement et de poursuite de cible lequel comporte un circuit d'écartométrie (56a) pour mesurer les écarts ( x, y) de la cible par rapport à un système d'axes lié au détecteur (3), le circuit de calcul effectuant la conversion ( S, G) de ces valeurs décarts pour tenir compte de la rotation d'image (ΘR).

**Patentansprüche**

1. Videoabbildungsvorrichtung zum Ausrüsten eines Zielsuchgeräts mit:
- einer Aufnahmeoptik (2) zum Fokussieren der Strahlung auf einen Bilddetektor (3), deren optische Achse (Z) die optische Eintrittsachse der Vorrichtung bildet;
- einem freien Gyroskop mit äußerem Kreisel (44) und zwei kardanisch aufgehängten (4) Achsen (AS, AG) zum Stabilisieren und Steuern der Raumorientierung der optischen Eingangsachse (Z), wobei die Kardanaufhängung (4) einen ersten Rahmen (43), der die Aufnahmeoptik (2) trägt und sich um eine erste mechanische Rotationsachse (AG) dreht, und einen zweiten Rahmen (42) enthält, der den ersten Rahmen trägt und sich um eine zweite mechanische Rotationsachse (AS) dreht, wobei die beiden mechanischen Achsen senkrecht zueinander sind und durch das Rotationszentrum (O) des Kardans (4) wie durch die optische Eingangsachse (Z) laufen;

- wobei der Bilddetektor (3) fest auf der Struktur (41, 1) des Zielsuchgeräts betestigt ist;

- optischen Umlenkmitteln (5 bis 9), die in der Kardanaufhängung (4) enthalten sind, um die optische Eingangsachse (Z) umzulenken und sie stets in die axiale Austrittsrichtung (Z') überzuführen, die Referenzrichtung genannt wird, durch das Zentrum (O) des Kardans läuft und im Zentrum des Detektors (3) endet, wobei die optischen Umlenkmittel ein erstes (5) und ein zweites (6) Umlenkmittel enthalten, das fest mit dem ersten Rahmen (43) verbunden ist, um die optische Eingangsachse (Z) gemäß der Richtung der ersten mechanischen Achse (AG) umzulenken, ein drittes Umlenkmittel enthalten (7), das fest mit dem zweiten Rahmen (42) verbunden ist, um den optischen Weg gemäß der Richtung der zweiten mechanischen Achse (AS) umzulenken, und ferner ein viertes (8) und ein fünftes (9) Umlenkmittel enthalten, das fest mit der Struktur des Zielsuchgeräts (41, 1) verbunden ist, um die Endrichtung des optischen Weges entlang der Referenzrichtung (Z') auszurichten;

- und Mitteln zum Ausgleichen der Bildrotation (ΘR) auf Höhe des Detektors (3), die aufgrund der Rotationen um die mechanischen Achsen entsteht, wobei diese Mittel zwei Winkelmeßvorrichtungen (35, 36), die jeweils mit den mechanischen Achsen gekoppelt sind, um die entsprechenden Rotationen zu messen, und Ausgleichskreise (37) enthalten, die fest mit der Struktur des Zielsuchgeräts (1) verbunden und von der Kardanaufhängung (4) entkoppelt sind, wobei die Ausgleichskreise einen Additionskreis (53) zum Summieren der durch die Meßvorrichtungen gemessenen Rotationswerte (ΘS und ΘG) enthalten, der durch seinen Ausgang Mittel zur Steuerung der Bildrotation versorgt.

2. Vorrichtung nach Anspruch 1, dadurch gekennzeichnet, daß die fünf optischen Umlenkmittel aus fünf reflektierenden Spiegeln (5 bis 9) zusammengesetzt sind.

3. Vorrichtung nach Anspruch 1, dadurch gekennzeichnet, daß die optischen Umlenkmittel aus sieben reflektierenden Spiegeln zusammengesetzt sind, wobei das erste Umlenkmittel (5) aus zwei parallelen Spiegeln (5a-5b) gebildet ist, die im 45°-Winkel zur optischen Eingangsachse (Z) geneigt sind, daß zweite (6), dritte (7) und vierte (8) Umlenkmittel jeweils aus einem reflektierenden Spiegel gebildet sind, der gleichermaßen um 45° bezüglich der Richtung der entsprechenden mechanischen Achse (AS, AG) geneigt ist, und daß fünfte Umlenkmittel (9) gleichermaßen durch zwei parallele Spiegel (9a-9b) gebildet sind, die um 45° bezüglich der Referenzachse (Z') geneigt sind, so daß alle Umlenkungen um 90° ausgeführt werden.

4. Vorrichtung nach Anspruch 3, dadurch gekennzeichnet, daß sie eine Anordnung von drei Prismen (21, 22, 23) zum Bilden der sieben Spiegel, ein erstes Prisma (21) mit drei reflektierenden Seiten, das sich um eine erste mechanische Achse (AG) drehen kann, ein zweites Prisma (22) mit einer reflektierenden Seite im Zentrum des Kardans und ein drittes Prisma (23) mit drei reflektierenden Seiten enthält, das sich um die zweite mechanische Achse (AS) drehen kann.

5. Vorrichtung nach Anspruch 1, dadurch gekennzeichnet, daß die optischen Umlenkmittel aus drei aufeinanderfolgenden Strängen von optischen Fasern (33, 32, 31), einem ersten Strang (33), der fest mit dem ersten Rahmen (43) verbunden ist und das erste (5) und zweite (6) Umlenkmittel ersetzt, einem zweiten Strang (32), der vom zweiten Rahmen (42) getragen wird und der das dritte Umlenkmittel (7) ersetzt, und einem dritten Strang (31) gebildet sind, der mit der Struktur des Zielsuchgeräts (1) fest verbunden ist und der das vierte (8) und fünfte (9) Umlenkmittel ersetzt, wobei die Aufnahmeoptik (2) das Bild auf eine Endseite des ersten Faserstranges (33) fokussiert.

6. Vorrichtung nach Anspruch 1, dadurch gekennzeichnet, daß der Bilddetektor, der eine Detektorzeile ist, eine Ablenkoptik (45) enthält, um das Abtasten des Feldbildes in mindestens einer Richtung zu erzeugen, wobei die Ablenkoptik hinter der Aufnahmeoptik (2a) gelegen ist und mit den optischen Umlenkmitteln (50) zum Versetzen des Bildes zusammenwirkt.

7. Vorrichtung nach Anspruch 6, dadurch gekennzeichnet, daß das zweite optische Umlenkmittel ein Facettenspiegel (60) ist, der durch den gyroskopischen Kreisel (44) zur Rotation angetrieben wird, um die Ablenkoptik (65) zu bilden, wobei er die vom ersten optischen Umlenkmittel (61) reflektierte optische Eingangsachse (Z) in Richtung der ersten mechanischen Achse (AG) ausrichtet.

8. Vorrichtung nach einem der Ansprüche 1 bis 5, dadurch gekennzeichnet, daß der Detektor eine Bildaufnahmeröhre (51) mit symmetrischen Zeilen- und Bildablenkspulen (52) ist und das Ausgangssignal des Additionskreises (53) dem Abtastgeneratorkreis (54) zugeführt wird, um den Ausgleich der Bildrotation durch Änderung der Abtastsägezähne zu erreichen.

9. Vorrichtung nach einem der Ansprüche 1 bis 5, dadurch gekennzeichnet, daß der Ausgang des Additionskreises (53) über einen Verstärkerkreis (58) mit Verstärkungsfaktor 0,5 einer Nachführregelung (66-67-69) zugeführt wird, die eine Korrekturoptik (68) um die Referenzachse (Z') antreibt, wobei die Korrekturoptik aus einem Wollaston-Prisma (70) einer Anordnung von Pechan-Prismen (71-72) oder einer Anordnung von drei Spiegeln (73-74-75) gebildet ist.

10. Vorrichtung nach einem der Ansprüche 1 bis 5, dadurch gekennzeichnet, daß der Parameter der Bildrotation (ΘR) einem Rechenkreis (56b) zugeführt wird, der in der Baugruppe (56) zur Verarbeitung und Verfolgung des Ziels enthalten ist, die einen Ablagemeßkreis (56a) zum Messen der Ablage (x, y) des Ziels bezüglich eines Systems mit dem Detektor (3) verbundener Achsen enthält, wobei der Rechenkreis die Umwandlung (S, G) dieser Abstandswerte ausführt, um die Bildrotation (ΘR) zu berücksichtigen.

## Claims

1. Video imaging device for use in a homing system, comprising:
- an optical reception unit (2) for focussing the radiation on an image detector (3) and the optical axis (Z) of which forms the optical input axis of the device;
- a free gyroscope having an external gyro (44) and a cardanic mounting (4) with two axes (AS, AG) for stabilizing and controlling the spatial orientation of the optical input axis (Z), said cardanic mounting (4) comprising a first frame (43) carrying the optical reception unit (2) and rotating about a first mechanic rotary axis (AG) and a second frame (42) carrying the first frame and rotating about a second mechanic rotary axis (AS), the two mechanic axes being perpendicular and passing through the center of rotation (0) of the cardanic mounting (4), the optical input axis (Z) likewise passing through such center;
- said image detector (3) being mounted fast on the structure (41, 1) of the homing system;
- optical deflection means (5 to 9) integrated in the cardanic mounting (4) for deflecting the optical input axis (Z) and continuously returning it to the axial output direction (Z') referred to as reference direction and passing through the center (O) of the cardanic mounting, and arriving at the center of the detector (3), these optical deflection means comprising first (5) and second (6) deflection means fast with the first frame (43) for deflecting the optical input axis (Z) along the direction of the first mechanic axis (AG), third deflection means (7) fast with the second frame (42) for subsequently deflecting the optical path along the direction of the second mechanic axis (AS), and fourth (8) and fifth (9) deflection means fast with the structure of the homing system (41, 1) for adjusting the final direction of the optical path along the reference direction (Z');
- and means compensating for the image rotation (ΘR) at the level of the detector (3) resulting from rotations about said mechanic axes, comprising two angle detectors (35, 36) respectively coupled to said mechanic axes for measuring the corresponding rotations, and compensation circuits (37) associated with the structure of the homing system (1) and decoupled from the cardanic mounting (4), these compensating circuits comprising an adding circuit (53) for adding the values (ΘS and ΘG) of rotation measured by the detectors, and the output of which is fed to image rotation control means.

2. Device according to claim 1, characterized in that the five optical deflection means are composed of five reflecting mirrors (5 to 9).

3. Device according to claim 1, characterized in that the optical deflection means are composed of seven reflecting mirrors, the first deflecting means (5) being formed by two parallel mirrors (5a - 5b) inclined at 45° with respect to the optical input axis (Z), the second (6) and third (7) and fourth (8) deflection means being each formed by a reflecting mirror likeweise inclined at 45° with respect to the direction of the corresponding mechanic axis (AS, AG), and the fifth deflection means (9) being likewise formed by two parallel mirrors (9a-9b) inclined at 45° with respect to the reference axis (Z'), so that all of the deflections are performed at 90°.

4. Device according to claim 3, characterized in that it comprises a set of three prisms (21, 22, 23) forming seven mirrors, a first prism (21) having three reflecting faces and susceptible of rotating about a first mechanic axis (AG), a second prism (22) having one reflecting face in the center of the cardanic mounting, and a third prism (23) having three reflecting faces and capable of rotating about the second mechanic axis (AS).

5. Device according to claim 1, characterized in that the optical deflection means are formed by three successive sections of optical fibers (33, 32, 31), a first section (33) being fast with the first frame (43) and replacing said first (5) and second (6) deflection means, a second section (32) carried by the second frame (42) replacing said third deflection means (7), and a third section (31) fixed to the structure of the homing system (1) and replacing said fourth (8) and fifth (9) deflection means, the optical reception unit (2) focussing the image onto an end face of the first fiber section (33).

6. Device according to claim 1, characterized in that the image detector is a detector bar and the device comprises an optical scanning unit (65) for scanning the field image in at least one direction, the optical scanning unit being mounted downstream of the optical reception unit (2a) and cooperating with optical scanning means (50) for the image shifting.

7. Device according to claim 6, characterized in that the second optical deflection means is a mirror having facets (60) and rotated by the gyro of the gyroscope (44) to form said optical deflection unit (65) and return the optical input axis (Z) reflected by the first optical deflection means (61) into the direction of the first mechanic axis (AG).

8. Device according to any of claims 1 to 5, characterized in that the detector is a picture tube (51) equipped with symmetrical line and frame deflection coils (52), and the output of the adding circuit (53) is applied to the scanning generator circuit (54) for producing the compensation of image rotation by modification of the scanning saw tooth signal.

9. Device according to any of claims 1 to 5, characterized in that the output of the adding circuit (53) is applied through an amplifier circuit (58) of gain 0.5 to a position control unit (66-67-69) driving a correcting optical unit (68) about the reference axis (Z') said correcting optical unit being formed by a Wollaston Prism (70), a Pechan prism mounting (71-72) or a mounting with three mirrors (73-74-75).

10. Device according to any of claims 1 to 5, characterized in that the parameter of image rotation ($\Theta$R) is applied to a calculating circuit (56b) included in a processing and target tracking unit (56) which comprises a deviation measurement circuit (56a) for measuring the deviations (x, y) of the target with respect to a system of axes connected to the detector (3), said calculating circuit performing the conversion (S, G) of these deviation values for taking into account the image rotation ($\Theta$R).

# FIG_1

38

SV

3

C

Z'

41

1

35

AS

θS

37

SC

θG

44

4

6

46

43

9

7

8

5

2

Z

42

48

47

36

45

AG

# FIG_2

6

Z'

9

C'

8

7

0

5

Z

FIG_3

FIG_4

FIG_6

# FIG_5

# FIG_7

# FIG_8

FIG_9

FIG_10-a

FIG_10-b

FIG_10-c